# EUROPÄISCHE PATENTSCHRIFT

(11) **EP 2 976 474 B1**
(45) Veröffentlichungstag und Bekanntmachung des Hinweises auf die Patenterteilung: **26.10.2016**
(21) Anmeldenummer: 14708794.4
(22) Anmeldetag: 11.02.2014
(51) Int. Cl.: E04F 19/04

(54) **VORRICHTUNG ZUM BEFESTIGEN EINES DECKENPROFILS**
DEVICE FOR FASTENING A CEILING PROFILE
DISPOSITIF DE FIXATION D'UNE MOULURE DE PLAFOND

(30) Priorität: 21.03.2013 AT 501942013
(43) Veröffentlichungstag der Anmeldung: 27.01.2016
(73) Patentinhaber: Neuhofer, Franz, 4893 Zell am Moos (AT)
(72) Erfinder: Neuhofer, Franz, 4893 Zell am Moos (AT)
(74) Vertreter: Patentanwaltskanzlei Hübscher
(86) Internationale Anmeldenummer: PCT/AT2014/050038
(87) Internationale Veröffentlichungsnummer: WO 2014/146153

(56) Entgegenhaltungen:
- DE-A1- 19 917 612

## Beschreibung

### Technisches Gebiet

Die Erfindung bezieht sich auf eine Vorrichtung zum Befestigen eines Längsnuten und einen Rastanschlag aufweisenden Deckenprofils für den Übergang zwischen einer Wand und einer Decke mit einem Halter, der einen Wandschenkel und zwei in die Längsnuten des Deckenprofils eingreifende Haltestege aufweist.

### Stand der Technik

Um Deckenprofile im Übergang zwischen einer Wand und einer Decke in einfacher Art festklemmen zu können, ist es bekannt (WO 2007/062446 A1), einen Halter mit einem an der Wand befestigbaren Wandschenkel vorzusehen, der zwei gegen das Deckenprofil vorstehende Klemmstege aufweist, die unter einer gegensinnigen federnden Anlage in Längsnuten des Deckenprofils eingreifen, sodass das Deckenprofil zwischen den beiden federnden Klemmstegen festgehalten wird. Voraussetzung für eine gute Halterung des Deckenprofils ist, dass eine ausreichende Klemmkraft auch über lange Zeitabschnitte aufrecht erhalten werden kann, was im Allgemeinen den Einsatz von Federstahl für die Halter bedingt, weil mit Haltern aus einem Kunststoffprofil die erforderlichen Klemmkräfte kaum, zumindest aber nicht über längere Zeiträume aufgebracht werden können.

Dokument DE19917612A1 offenbart eine Vorrichtung gemäß der Präambel des Anspruchs 1.

### Darstellung der Erfindung

Der Erfindung liegt somit die Aufgabe zugrunde, eine Vorrichtung zum Befestigen eines Deckenprofils im Übergang zwischen einer Wand und einer Decke so auszugestalten, dass Halter aus Kunststoff eingesetzt werden können, ohne eine dauerhafte, sichere Halterung der Deckenprofile zu gefährden.

Ausgehend von einer Vorrichtung der eingangs geschilderten Art löst die Erfindung die gestellte Aufgabe dadurch, dass der Halter ein Kunststoffprofil mit einem unten vom Wandschenkel unter einem spitzen Winkel abstehenden Tragschenkel und mit einem den Wandschenkel oben mit dem Tragschenkel verbindenden Stützschenkel bildet, dass die quer zum Wandschenkel verlaufenden Haltestege vom Tragschenkel abstehen und dass der Tragschenkel über den Stützschenkel hinaus zu einem mit dem Rastanschlag des Deckenprofils zusammenwirkenden, federnden Rasthaken verlängert ist.

Durch das Schließen des Wand- und des Tragschenkels über einen Stützschenkel zu einem hohlen Kunststoffprofil wird zunächst eine ausreichende Festigkeit für den Halter sichergestellt, um die aufzunehmenden Lasten über die am Tragschenkel angesetzten Haltestege auf die Wand abtragen zu können. Auf die quer zum Wandschenkel verlaufenden, vorzugsweise parallelen Haltestege wird das Deckenprofil quer zu seiner Längsrichtung aufgeschoben, wobei die Haltestege in die hierfür vorgesehenen Längsnuten des Deckenprofils eingreifen. Damit wird das Deckenprofil in vertikaler Richtung gehalten, nicht aber vor einem Abziehen von den Haltestegen quer zum Wandschenkel gesichert. Aus diesem Grunde ist der Tragschenkel über den Stützschenkel hinaus zu einem federnden Rasthaken verlängert, der beim Aufschieben des Deckenprofils auf die Haltestege einen Rastanschlag des Deckenprofils hintergreift, sodass das Deckenprofil nicht mehr unbeabsichtigt vom Halter gelöst werden kann. Da aufgrund dieser Maßnahmen die Halterung des Deckenprofils nicht durch eine Klemmwirkung erfolgt und die Lagesicherung des Deckenprofils auf dem Kunststoffprofils des Halters über einen mit einem Rastanschlag des Deckenprofils zusammenwirkenden Rasthaken vorgenommen wird, spielen die dauerelastischen Eigenschaften des Kunststoffprofils des Halters für die Halterung des Deckenprofils keine Rolle. Die Halterung des Deckenprofils ist folglich von Alterungserscheinungen des Kunststoffprofils unabhängig. Die federnden Eigenschaften des Rasthakens dienen ja lediglich dazu, ein schnappverschlussartiges Hintergreifen des Rastanschlags zu sichern. In der Anschlagstellung ist keine Federkraft erforderlich.

Um das Anliegen des Deckenprofils sowohl an der Wand als auch an der Decke zu sichern, ist der Wandschenkel des Halters in einem vorgegebenen Höhenabstand von der Decke an der Wand zu befestigen. Bildet der Stützschenkel einen Deckenanschlag in Form einer dachartigen Abwinkelung, so wird dieser Höhenabstand durch den einen Deckenanschlag bildenden Stützschenkel konstruktiv vorgegeben. Die dachartige Abwinkelung des Stützschenkels berücksichtigt dabei den Umstand, dass im Übergangsbereich von der Wand zur Decke im Allgemeinen mit einer Hohlkehle zu rechnen ist.

Zur Wandbefestigung des Halters ergeben sich verschiedene Möglichkeiten. So kann der Wandschenkel auf wenigstens einer Seite einen Befestigungsansatz aufweisen, durch den das Kunststoffprofils des Halters an der Wand festgeschraubt werden kann. Mit dem vorzugsweisen Vorsehen von zwei seitlichen Befestigungsansätzen wird ein Neigen des Kunststoffprofils um die Achse der Befestigungsschraube verhindert. Eine andere Möglichkeit der Befestigung des Halters ergibt sich, wenn der Wandschenkel eine Durchgangsöffnung für eine durch einen Durchtritt im Tragschenkel zugängige Befestigungsschraube aufweist. In diesem Fall kann die Sicherung einer vorgegebenen Drehstellung um die Achse der Befestigungsschraube lediglich über einen Deckenanschlag erfolgen. Gleiches gilt für eine Ausführungsform, bei der der Tragschenkel und der Stützschenkel zwei zwischen sich den Durchtritt für die Befestigungsschraube freigebende Bügel bilden. Der Drehsicherung für den Halter kommt allerdings angesichts des Umstands, dass das auf die Haltestege aufgesteckte Deckenprofil zwangsläufig eine drehfeste Abstützung gegenüber der Decke erfährt, nur eine Montagebedeutung zu.

### Kurze Beschreibung der Zeichnung

In der Zeichnung ist der Erfindungsgegenstand beispielsweise dargestellt. Es zeigen
- Fig. 1: eine erfindungsgemäße Vorrichtung zum Befestigen eines Deckenprofils im Übergang zwischen einer Wand und einer Decke in einer vereinfachten Seitenansicht,
- Fig. 2: den Halter nach der Fig. 1 in einer Vorderansicht,
- Fig. 3: eine Ausführungsvariante eines erfindungsgemäßen Halters in einer der Fig. 2 entsprechenden Vorderansicht,
- Fig. 4: den Halter nach der Fig. 3 in einem Schnitt nach der Linie IV-IV der Fig. 3,
- Fig. 5: eine der Fig. 3 entsprechende Darstellung einer weiteren Konstruktionsvariante eines erfindungsgemäßen Halters und
- Fig. 6: den Halter nach der Fig. 5 in einem Schnitt nach der Linie VI-VI der Fig. 5.

### Weg zur Ausführung der Erfindung

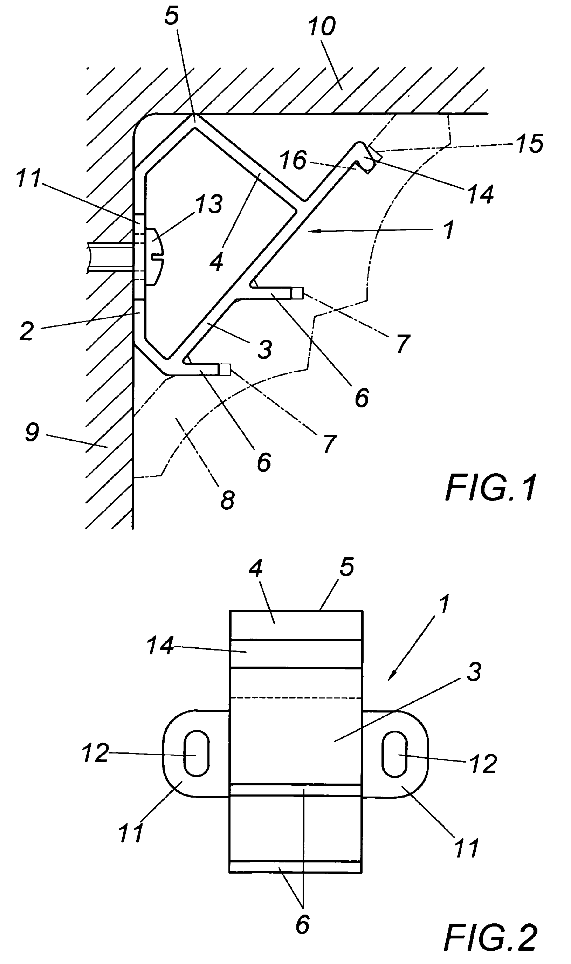

Die Befestigungsvorrichtung gemäß dem Ausführungsbeispiel nach den Fig. 1 und 2 umfasst einen Halter 1 aus einem Kunststoffprofil, das einen Wandschenkel 2 sowie einen unten vom Wandschenkel 2 unter einem spitzen Winkel abstehenden Tragschenkel 3 bildet, der oben mit dem Wandschenkel 2 über einen Stützschenkel 4 zu einem Hohlprofil verbunden ist. Der Stützschenkel 4 besitzt die Form einer dachartigen Abwinkelung zur Ausbildung eines Deckenanschlags 5, wie dies der Fig. 1 entnommen werden kann. Vom Tragschenkel 3 stehen zwei quer zum Wandschenkel 2 ausgerichtete, parallele Haltestege 6 ab, die in Längsnuten 7 eines strichpunktiert angedeuteten Deckenprofils 8 eingreifen.

Zur Befestigung des Halters 1 im Übergangsbereich zwischen einer Wand 9 und einer Decke 10 ist der Wandschenkel 2 mit zwei seitlichen Befestigungsansätzen 11 versehen, die Durchgangslöcher 12 für Befestigungsschrauben 13 bilden, sodass der Halter 1 entsprechend der Fig. 1 so an der Wand 9 festgeschraubt werden kann, dass der Halter 1 über den Deckenanschlag 5 an der Decke 10 anliegt. Mit dem Aufschieben des Deckenprofils 8 auf die Haltestege 6 quer zur Längsrichtung des Deckenprofils 8 wird das Deckenprofil 8 montiert. Die Haltestege 6 halten das Deckenprofil 8 in vertikaler Richtung fest. Es muss allerdings zusätzlich für eine Sicherung gegenüber einem unbeabsichtigten Abziehen des Deckenprofils 8 von den Haltestegen 6 gesorgt werden. Zu diesem Zweck ist der Tragschenkel 3 über den Stützschenkel 4 hinaus z einem federnden Rasthaken 14 verlängert, der mit einem durch eine Längsnut 15 gebildeten Rastanschlag 16 des Deckenprofils 8 zusammenwirkt und beim Aufschieben des Deckenprofils 8 auf die Haltestege 6 den Rastanschlag 16 schnappverschlussartig hintergreift.

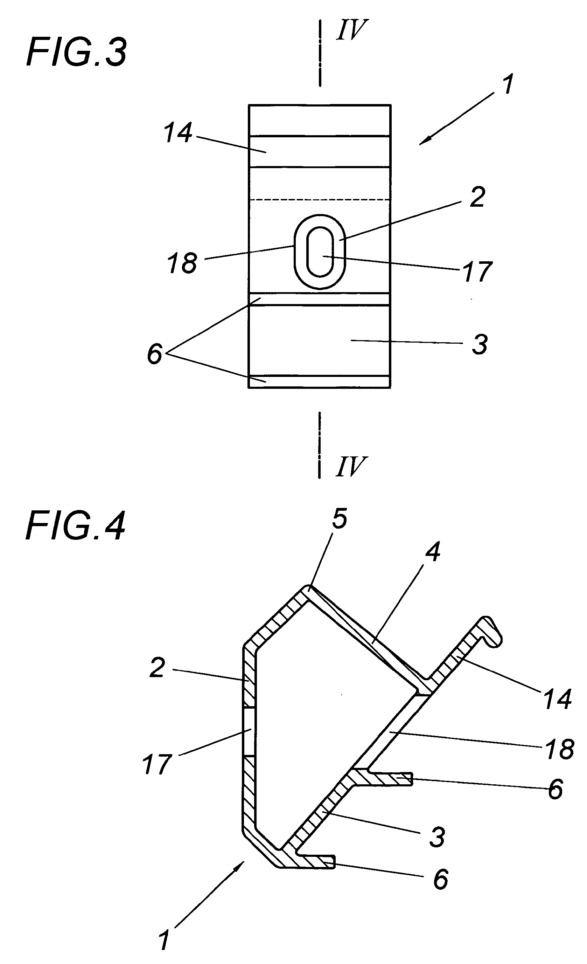

Zum Unterschied zum Ausführungsbeispiel nach den Fig. 1 und 2 weist der Halter 1 nach den Fig. 3 und 4 keine seitlichen Befestigungsansätze 11 auf. Die Befestigung des Halters 1 erfolgt vielmehr über eine Durchgangsöffnung 17 im Wandschenkel 2 des Halters 1. Der Zugang zu einer Befestigungsschraube wird dabei durch einen entsprechend großen Durchtritt 18 im Tragschenkel 3 erreicht.

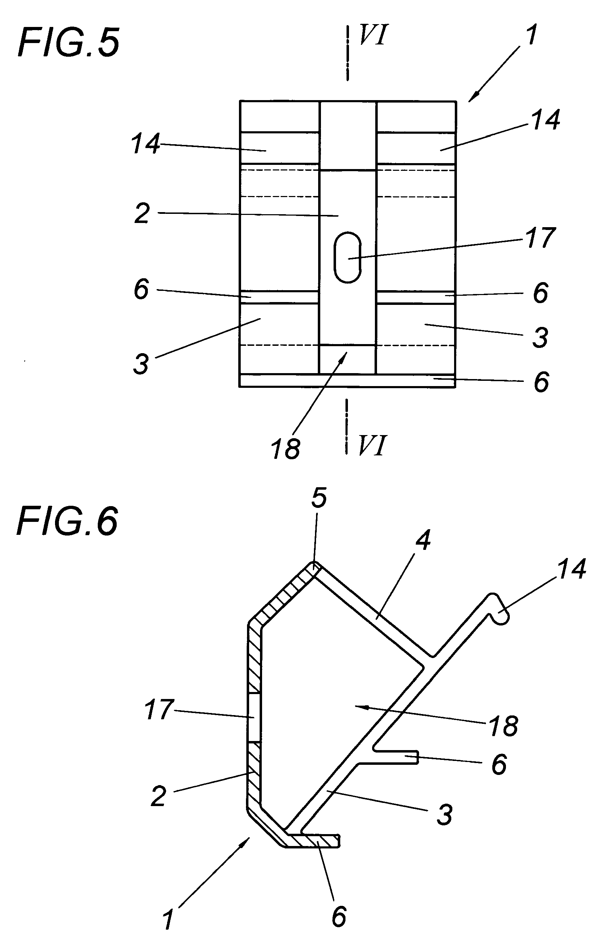

Eine weitere Ausführungsvariante ist in den Fig. 5 und 6 gezeigt. In diesem Ausführungsbeispiel weist der Wandschenkel 2 ebenfalls eine Durchgangsöffnung 17 für eine Befestigungsschraube auf, doch bilden zum Unterschied zu den Fig. 3 und 4 der Tragschenkel 3 und der Stützschenkel 4 zwei zwischen sich den Durchtritt 18 freigebende Bügel, sodass die die Durchgangsöffnung 17 im Wandschenkel 2 durchsetzende Befestigungsschraube durch den freien Durchtritt 18 zwischen den Bügeln zugängig wird.

## Patentansprüche

1. Vorrichtung zum Befestigen eines Längsnuten (7) und einen Rastanschlag (16) aufweisenden Deckenprofils (8) für den Übergang zwischen einer Wand (9) und einer Decke (10) mit einem Halter (1), der einen Wandschenkel (2) und zwei in die Längsnuten (7) des Deckenprofils (8) eingreifende Haltestege (6) aufweist, wobei der Halter (1) ein Kunststoffprofil mit einem unten vom Wandschenkel (2) unter einem spitzen Winkel abstehenden Tragschenkel (3) und mit einem Stützschenkel (4) bildet, wobei die quer zum Wandschenkel (2) verlaufenden Haltestege (6) vom Tragschenkel (3) abstehen, **dadurch gekennzeichnet, dass** der Tragschenkel (3) über den Stützschenkel (4) hinaus zu einem mit dem Rastanschlag (16) des Deckenprofils (8) zusammenwirkenden, federnden Rasthaken (14) verlängert ist, und dass der Schützschenkel (4) den Wandschenkel (2) oben mit dem Tragschenkel (3) verbindet.

2. Vorrichtung nach Anspruch 1, **dadurch gekennzeichnet, dass** der Stützschenkel (4) einen Deckenanschlag (5) in Form einer dachartigen Abwinkelung bildet.

3. Vorrichtung nach Anspruch 1 oder 2, **dadurch gekennzeichnet, dass** der Wandschenkel (2) auf wenigstens einer Seite einen Befestigungsansatz (11) aufweist.

4. Vorrichtung nach Anspruch 1 oder 2, **dadurch gekennzeichnet, dass** der Wandschenkel (2) eine Durchgangsöffnung (17) für eine durch einen Durchtritt (18) im Tragschenkel (3) zugängige Befestigungsschraube aufweist.

5. Vorrichtung nach Anspruch 4, **dadurch gekennzeichnet, dass** der Tragschenkel (3) und der Stützschenkel (4) zwei zwischen sich den Durchtritt (18) für die Befestigungsschraube freigebende Bügel bilden.

## Claims

1. Device for fastening a ceiling profile (8), which comprises longitudinal grooves (7) and a latching stop (16), for the transition between a wall (9) and a ceiling (10) having a holder (1) which has a wall limb (2) and two holding webs (6), which engage in the longitudinal grooves (7) of the ceiling profile (8), wherein the holder (1) forms a synthetic material profile having a carrying limb (3), which protrudes at the bottom from the wall limb (2) at an acute angle, and having a support limb (4), wherein the holding webs (6) extending transversely to the wall limb (2) protrude from the carrying limb (3), **characterised in that** the carrying limb (3) is extended beyond the support limb (4) to form a resilient latching hook (14) which cooperates with the latching stop (16) of the ceiling profile (8), and that the support limb (4) connects the wall limb (2) at the top to the carrying limb (3).

2. Device as claimed in claim 1, **characterised in that** the support limb (4) forms a ceiling stop (5) in the form of a roof-like angled piece.

3. Device as claimed in claim 1 or 2, **characterised in that** the wall limb (2) has a fastening lug (11) on at least one side.

4. Device as claimed in claim 1 or 2, **characterised in that** the wall limb (2) has a through opening (17) for a fastening screw accessible through a passage (18) in the carrying limb (3).

5. Device as claimed in claim 4, **characterised in that** the carrying limb (3) and the support limb (4) form two brackets which leave open the passage (18) for the fastening screw between them.

## Revendications

1. Dispositif de fixation d'une moulure de plafond (8) présentant une rainure longitudinale (7) et une butée d'encliquetage (16) pour la transition entre une cloison (9) et un plafond (10) avec un support (1) qui présente une branche murale (2) et deux ailettes de retenue (6) qui s'engagent dans les rainures longitudinales (7) de la moulure de plafond (8), le support (1) formant un profilé en matière plastique avec une branche support (3) qui est écartée de la branche murale (2) selon un angle aigu et avec une branche de soutien (4), les ailettes de retenue (6) s'étendant transversalement à la branche murale (2) faisant saillie de la branche support (3), **caractérisé en ce que** la branche support (3) est prolongée au-delà de la branche de soutien (4) jusqu'à un crochet d'encliquetage (14) élastique qui coopère avec une butée d'encliquetage (16) de la moulure de plafond (8) et **en ce que** la branche de soutien (4) relie, au-dessus, la branche murale (2) à la branche support (3).

2. Dispositif de fixation selon la revendication 1, **caractérisé en ce que** la branche de soutien (4) forme une butée de plafond (5) sous la forme d'un coude en forme de toit.

3. Dispositif selon la revendication 1 ou 2, **caractérisé en ce que** la branche murale (2) présente sur au moins un côté un embout de fixation (11).

4. Dispositif selon la revendication 1 ou 2, **caractérisé en ce que** la branche murale (2) présente une ouverture de passage (17) pour une vis de fixation accessible par un passage (18) dans la branche support (3).

5. Dispositif selon la revendication 4, **caractérisé en ce que** la branche support (3) et la branche de soutien (4) forment deux arcs libérant entre eux un passage (18) pour la vis de fixation.
